# EUROPÄISCHE PATENTSCHRIFT

(11) **EP 1 366 849 B1**
(45) Veröffentlichungstag und Bekanntmachung des Hinweises auf die Patenterteilung: **27.07.2005**
(21) Anmeldenummer: 02077206.7
(22) Anmeldetag: 27.05.2002
(51) Int. Cl.: B23Q 5/38, B23Q 37/00, B23Q 1/58, B23Q 17/22

(54) **Linearführungssystem**
Linear motion guide
Guidage linéaire

(43) Veröffentlichungstag der Anmeldung: 03.12.2003
(73) Patentinhaber: Schneeberger Holding AG, 4914 Roggwil (CH)
(72) Erfinder: Schröppel, Winfried, 72800 Eningen u.A. (DE); Dann, Thomas, 76307 Karlsbad 2 (DE)
(74) Vertreter: EGLI-EUROPEAN PATENT ATTORNEYS

(56) Entgegenhaltungen:
- EP-A- 0 790 098
- WO-A-99/12786
- DE-A- 4 233 332
- DE-U- 9 308 023

## Beschreibung

Die Erfindung betrifft eine verzahnte Linearbewegungsführung, umfassend zumindest eine Führungsschiene, die Laufflächen für Wälzkörper aufweist, zumindest einen Schlitten, der über die Wälzkörper auf der Schiene gelagert und relativ zu dieser längsverschiebbar ist, mehrere Zahnstangen, die alternativ zueinander an der Schiene lösbar befestigbar sind, wobei die Zahnstange zumindest über einen Teil ihrer Länge mit einer Verzahnung versehen ist, nach dem Oberbegriff des Anspruchs 1, wie sie aus WO 9 912 786 A bekannt ist.

Um in Maschinen oder Anlagen lineare Bewegungen ausführen zu können, sind Linearbewegungsführungen bekannt, die eine Schiene aufweisen, an der ein Schlitten über Wälzkörper geführt und gelagert ist. Bei einem bestimmten Typ von Linearbewegungsführungen ist zusätzlich eine Zahnstange vorhanden, die mit der Schiene verbunden ist und parallel zu dieser verläuft. In die Zahnstange können beispielsweise ein oder mehrere Ritzel eingreifen. Eine auf das Ritzel übertragene rotatorische Antriebsbewegung führt zu einer linearen Abrollbewegung des Ritzels, genauer gesagt der Mittelachse des Ritzels, parallel zur Linearbewegungsachse. Sind ein oder mehrere auf der Schiene angeordnete Schlitten mit dem Ritzel wirkverbunden, so werden auch die Schlitten von der Antriebsbewegung auf der Schiene mitgenommen.

Als erste Untergruppe dieses Typus von Linearbewegungsführungen sind solche vorbekannt, bei denen die Schiene und die Zahnstange im wesentlichen die gleiche Länge aufweisen und einstückig miteinander verbunden bzw. ausgebildet sind. Derartige Linearbewegungsführungen sind beispielsweise durch die Produkte Schneeberger Monorail MZ, der W. Schneeberger AG (Roggwil, Schweiz) und INA KUVE..SB ZHP, der INA-Schaeffler KG (Herzogenaurach, Bundesrepublik Deutschland), vorbekannt. Als nachteilig hieran wird jedoch empfunden, dass sich hiermit keine Führungen mit einer einstückigen Schiene grösserer Länge fertigen lassen, die zudem hohen Qualitätsanforderungen gerecht werden.

Fertigungsbedingt war es bisher nicht oder höchstens nur mit einem ganz erheblichen Aufwand möglich, eine solche einstückige, verzahnte Linearbewegungsführung herzustellen, die trotz einer grösseren Länge, beispielsweise von 4 m und mehr, auch hochpräzise und hochbelastbar ist. Problematisch ist unter anderem, geringe Lagetoleranzen der Schiene und der Zahnstange zu erzielen, beispielsweise in Bezug auf Biegung und Torsion. Aufgrund der zur Erreichung einer hohen Belastbarkeit erforderlichen Härtung der Zahnstange tendiert die Schiene zum Verzug. Ein Verzug, insbesondere in Form von einer Torsion der Zahnstange, kann aber auch schon alleine durch den zur Erzeugung einer Verzahnung üblicherweise vorgesehenen Zerspannungsvorgang entstehen. Aufgrund eines zur Korrektur der Torsion dann vorgesehenen Richtvorganges besteht zwar die Möglichkeit, den Torsionsfehler zu korrigieren. Allerdings hat der Richtvorgang dann oftmals einen Teilungsfehler der Verzahnung zur Folge. Insbesondere bei der einstückig mit der Schiene verbundenen Zahnstange besteht das Problem, dass sich Fehler bezüglich der Lage der einzelnen Zähne über die Länge der Zahnstange aufsummieren und auf diese Weise ganz erhebliche sogenannte Summenteilungsfehler entstehen können.

Aus diesen Gründen werden derartige Linearbewegungsführungen üblicherweise nur mit einer maximalen Länge von 1,6 m angeboten. Ist eine längere Führung erforderlich, so müssen mehrere dieser einstückigen Schiene/Zahnstangen-Komponenten aneinander gefügt werden. Bei grösseren Längen, beispielsweise bei 4 m Länge und mehr, entsteht dann aber eine Vielzahl von Fugen zwischen aufeinander folgenden Schienenabschnitten, die die Wälzkörper überfahren müssen. Dies kann sich nachteilig auf die Lebensdauer der Wälzkörper sowie auf die Laufruhe und Präzision der Führung auswirken.

Es ist auch ein anderer Typ derartiger verzahnter Linearbewegungsführungen bekannt geworden, bei denen die Schiene und die Zahnstange im wesentlichen die gleiche Länge aufweisen und jeweils für sich genommen einstückig ausgebildet sind. Eine solche Führung wird beispielsweise von der Anmelderin unter der Bezeichnung BZ 15 angeboten. Die Schiene und die Zahnstange müssen miteinander verbunden werden, beispielsweise durch Schraubenverbindungen. Aufgrund der grossen Länge der Schiene und der Zahnstange können sich Lagefehler der für die Schraubenverbindungen vorgesehenen Löcher der Schiene und der Zahnstange aufsummieren, so dass diese nicht mehr miteinander fluchten. Um diesen Fertigungsfehler zu kompensieren, bedarf es eines grossen Aufwandes, sofern dies aufgrund der Grösse des Fehlers überhaupt möglich ist.

Bei einer weiteren vorbekannten Lösung ist vorgesehen, dass der Maschinenhersteller, der eine verzahnte Führung beispielsweise in eine Werkzeugmaschine einbauen möchte, die Schiene und die Zahnstange selbst miteinander fügt, beispielsweise weil sie von unterschiedlichen Anbietern stammen. Dies bedeutet jedoch für den Maschinenhersteller einen grossen Montage- und Justieraufwand.

Sämtliche vorbekannten Schienen-Zahnstangen-Führungen haben den Nachteil, dass sie nur wenige bis keine Möglichkeiten bieten, auf unterschiedliche technische Anforderungen reagieren zu können. Insbesondere bei den Lösungen, bei denen die Schiene und die Zahnstange einstückig miteinander verbunden sind, kann diese weder an unterschiedliche Belastungs- noch an unterschiedliche konstruktive Anforderungen angepasst werden.

Der Erfindung liegt deshalb die Aufgabe zugrunde, eine Möglichkeit zu schaffen, mit möglichst geringem Aufwand auf derart unterschiedliche Anforderungen reagieren zu können.

Die Aufgabe wird erfindungsgemäss durch ein Linearführungssystem gemäß Anspruch 1 gelöst, bei dem sich mehrere Linearbewegungsführungen mit jeweils einer Schiene und einer Zahnstange dadurch bilden lassen, dass jede der Zahnstangen aus Zahnstangensegmenten zusammensetzbar ist, hierbei mehrere unterschiedliche Typen von Zahnstangensegmenten vorgesehen sind, die sich zumindest in Bezug auf Eigenschaften der Verzahnungen voneinander unterscheiden, und jedes der Zahnstangensegmente an der Schiene lösbar befestigbar ist.

Dieser Lösung liegt der Gedanke zugrunde, ein modulares Linearbewegungsführungssystem auszubilden. Bei diesem sollen zumindest an den Stellen der Linearbewegungsführung zueinander alternativ verwendbare Bauteile vorgesehen werden können, die im Hinblick auf unterschiedliche Belastbarkeits- und/oder Genauigkeitsanforderungen kritisch sind.

Hiervon ist zunächst die Zahnstange betroffen. Erfindungsgemäss sollte deshalb vorgesehen sein, dass sich die Zahnstange aus Zahnstangensegmenten zusammensetzt, die vorbestimmte Längen aufweisen. Sind in einem solchen Baukasten mehrere unterschiedliche Längen vorgesehen, so können durch mehrere Zahnstangensegmente der gleichen und unterschiedlicher Länge, eine Vielzahl von unterschiedlichen Gesamtlängen erreicht werden. Die erzielbaren Gesamtlängen liegen dann alle innerhalb eines Rasters, dessen Mass sich aus der Länge des kürzesten Segments ergibt. So kann beispielsweise das kürzeste Zahnstangensegment eine Länge aus einem Bereich von 300 mm bis 600 mm, vorzugsweise von zumindest näherungsweise 400 mm aufweisen. Die weiteren Zahnstangensegmente mit gleicher Verzahnung haben dann eine Länge, die einer Verlängerung um die Hälfte des jeweils nächstkürzeren Zahnstangensegments entspricht. Auf diese Weise kann beispielsweise die Anzahl an unterschiedlichen Längen auf drei beschränkt werden.

Erfindungsgemäss sollten jedoch auch mehrere Zahnstangensegmente mit unterschiedlichen Eigenschaften vorhanden sein. In erster Linie kommen unterschiedliche Verzahnungen in Betracht. Variationen in der Verzahnung können beispielsweise durch Zahnstangensegmente mit Gerad- oder Schrägverzahnung oder auch durch einen unterschiedlichen Modul erreicht werden. Schliesslich kommen auch unterschiedliche Verzahnungsqualitäten in Betracht, die in Abhängigkeit des jeweiligen Anwendungsfalls von Anwenderseite her benötigt werden. Schliesslich können für die Zahnstangensegmente auch unterschiedliche Werkstoffe, Rauhtiefen, Härte der Zahnflanken und ähnliches, vorgesehen sein.

Ebenso können auch mehrere Führungsschienen mit unterschiedlichen Eigenschaften vorgesehen sein. Unter "unterschiedlichen Eigenschaften" sind in diesem Zusammenhang in erster Linie unterschiedliche Querschnittsformen, Querschnittsflächen und Materialeigenschaften der Schiene zu verstehen. Jeder Typ der Zahnstangensegmente sollte an jeder der unterschiedlichen Schienen montierbar sein. Hierbei sollte es auch möglich sein, an einer Schiene unterschiedliche Zahnstangensegmente zu befestigen. Zudem sollten in die Zahnstange auch Segmente ohne Verzahnung integrierbar sein, sofern über eine bestimmte Teillänge - oder auch über die Gesamtlänge - der jeweiligen Linearführung keine Verzahnung benötigt wird. Wird die Verzahnung der Zahnstange auf die Stellen beschränkt, an denen auch eine Verzahnung benötigt wird, so können die Kosten und der technische Aufwand für die Linearbewegungsführung minimiert werden.

Um die Befestigungen der Zahnstangensegmente an den Schienen zu vereinfachen, kann eine Standardisierung vorgesehen sein. Diese kann darin bestehen, dass auch die Befestigungsmittel, wie Bohrungen und Schrauben, in einem bestimmten Raster in Bezug auf die Führungsachse vorgesehen sind.

Es hat sich überraschenderweise gezeigt, dass sich durch diese erfindungsgemässen Massnahmen nicht nur sehr einfach ein ganzes Linearführungssystem bilden lässt. Werden hierbei zudem die Schienen selbst so weit als möglich einstückig ausgebildet und die Zahnstangen jeweils durch einzelne Zahnstangensegmente zusammengesetzt, so wirkt sich dies auch positiv auf die mit den Führungen erzielbaren Positioniergenauigkeiten aus. So kann an eine einstückige Schiene mit einer Länge von bis zu 6 m und mehr eine gleichlange oder kürzere Zahnstange angefügt sein, die sich aus einzelnen Zahnstangensegmenten zusammensetzt. Die Länge der Zahnstangensegmente kann aus einem Bereich von 250 mm bis 600 mm, besonders bevorzugt von 350 mm bis 450 mm, insbesondere ca. 400 mm, gewählt sein. Bei einer solchen erfindungsgemässen Linearbewegungsführung lässt sich mit weit weniger Aufwand als bei herkömmlichen Linearbewegungsführungen eine gute Führungs- und Positioniergenauigkeit, insbesondere hinsichtlich Lagetoleranzen, erreichen. Selbstverständlich gilt dies auch schon bei kleineren Längen, wie beispielsweise 3 m, 4 m oder 5 m.

Ein weiterer Aspekt der Erfindung, der auch selbständige Bedeutung hat, betrifft in die Linearführung integrierbare Messsysteme. Besonders geeignet sind hierfür Messsysteme mit alternierend wechselnden Markierungen vorbestimmter Länge.

Beispiele hierfür sind magnetische Nord- und Südpole, Hell-Dunkel-Markierungen, Reflektierend-Absorbierend-Markierungen und dergleichen. Derartige Weginformationen können mit relativ zu den Markierungen verfahrbaren Sensoren/Fühler durch berührende oder berührungslose Messung detektiert werden. Hierbei kommen sowohl Sensoren/Fühler in Betracht, die für den eigentlichen Messvorgang eine Relativbewegung benötigen als auch solche, die bei ruhendem System in der Lage sind Messwerte zu bestimmen, insbesondere gegenüber einer Referenzstelle des Messsystems absolute Messwerte.

Bei einer ersten Lösung kann vorgesehen sein, dass die Verzahnungen von einer oder mehreren Zahnstangen auch als Massverkörperung benutzt wird. Unter Massverkörperung wird hierbei ein Gegenstand verstanden, auf dem messbare Weginformationen aufgebracht sind. Es hat sich nun überraschenderweise gezeigt, dass auf eine zusätzliche Massverkörperung verzichtet werden kann und trotzdem sehr genau Weginformationen an der Führung abgegriffen werden können. Es besteht nämlich oftmals eine Korrelation zwischen der Fertigungsgenauigkeit - und damit den zulässigen Toleranzen - der bei gattungsgemässen Führungen vorgesehenen Verzahnungen einerseits und der geforderten Führungs- bzw. Positioniergenauigkeit andererseits. Die Positioniergenauigkeit in Richtung der Linearbewegungsachse ergibt sich jedoch im wesentlichen aus der Messgenauigkeit. Die zur Übertragung einer Antriebsbewegung vorgesehene Verzahnung kann somit erfindungsgemäss zur Messung von Lage und Geschwindigkeit zwischen einem oder mehreren auf der Schiene angeordneten Wagen und der Schiene selbst genutzt werden. Somit kann eine ohnehin notwendigerweise vorgesehene Verzahnung erfindungsgemäss auch als Massverkörperung Verwendung finden. Es hat sich gezeigt, dass hiermit eine absolute Positioniergenauigkeit von bis zu 10 µm und weniger, bei einer Reproduzierbarkeit von 1 µm und weniger, möglich sind.

Zur Aufnahme der Messwerte über die Verzahnung sind grundsätzlich unterschiedlichste physikalische Prinzipien geeignet. Bevorzugt sind jedoch entweder auf magnetischer, optischer oder auf induktiver Basis arbeitende Messwertaufnehmer. Mit beispielsweise einem permanenterregten magnetoresistiven Sensor kann die aufgrund der Zähne und Zahnlücken gegebene Periodizität mit sehr genauer Teilungsqualität abgetastet werden. Hierfür geeignete Messwertaufnehmer sind beispielsweise die vom Unternehmen Rheintacho Messtechnik GmbH, D-79111 Freiburg, Deutschland unter der Produktbezeichnung SMN5 GI00.SB angebotenen Messköpfe. Geeignete induktive Messwertaufnehmer sind beispielsweise die von der Balluf GmbH, D-73765 Neuhausen a.d.F., Deutschland, unter der Bezeichnung BES S16-3044-G-E4-L angebotenen Sensoren.

Selbstverständlich können in einem erfindungsgemässen Führungssystem auch Messsysteme vorgesehen sein, die auf einer eigenständigen Massverkörperung basieren. Diese können ein parallel zur Längsachse der Führung verlaufendes und entweder an der Schiene oder der Zahnstange befestigtes Band aufweisen, das Träger für eine Massverkörperung ist. Ein solches Band kann auch gleichzeitig zur Abdeckung von Bohrungsausnehmungen von entweder der Schiene oder der Zahnstange vorgesehen sein. Besonders geeignet sind hierfür alternierend wechselnde Markierungen vorbestimmter Länge, die beispielsweise einer der zuvor genannten Eigenschaftstypen entspricht. Gemäss dem der Erfindung zugrundeliegende Modularitätsgedanken kann vorgesehen sein, dass sowohl ein Band als auch ein Sensor in konstruktiv unterschiedlich gestalteten Linearbewegungsführungen verwendet werden kann.

Insbesondere in Abhängigkeit von der erforderlichen Genauigkeit kann eine Massverkörperung auch direkt auf die Schiene oder Zahnstange aufgebracht werden, beispielsweise durch Prägung.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine perspektivische Darstellung einer erfindungsgemässen Linearbewegungsführung;
- Fig. 2: eine Querschnittsdarstellung der Linear-bewegungsführung aus Fig. 1;
- Fig. 3: eine Stossstelle von zwei an einer Führungsschiene befestigter Zahnstangensegmente;
- Fig. 4: eine perspektivische Teildarstellung einer Maschine mit einer erfindungsgemässen Linearbewegungsführung.
- Fig. 5: eine perspektivische Teildarstellung einer weiteren Linearbewegungsführung aus einem erfindungsgemässen Linearführungssystem;
- Fig. 6: eine perspektivische Teildarstellung einer weiteren Linearbewegungsführung aus einem erfindungsgemässen Linearführungssystem;
- Fig. 7: eine Querschnittsdarstellung einer Linear-bewegungsführung mit einer erfindungsgemässen berührungslosen Messeinrichtung;
- Fig. 8: eine Querschnittsdarstellung einer weiteren zum erfindungsgemässen Linearführungssystem gehörenden Linearbewegungsführung mit einer Messeinrichtung;
- Fig. 9: eine Querschnittsdarstellung einer weiteren zum erfindungsgemässen Linearführungssystem gehörenden Linearbewegungsführung mit einer Messeinrichtung;
- Fig. 10: eine Querschnittsdarstellung einer weiteren zum erfindungsgemässen Linearführungssystem gehörenden Linearbewegungsführung mit einer Messeinrichtung.

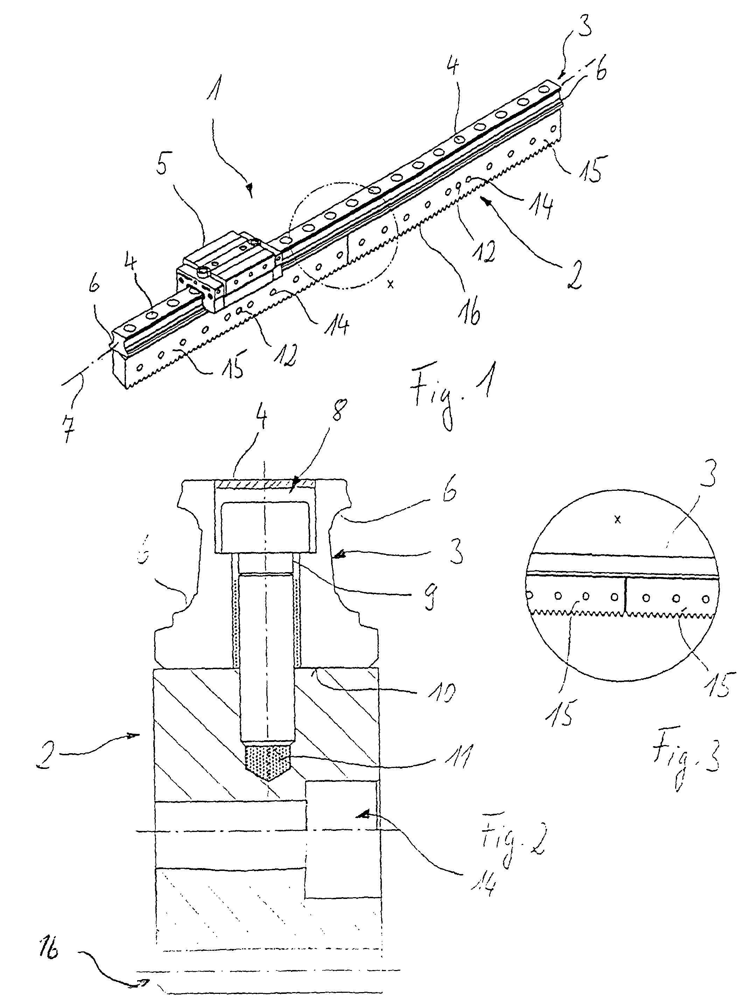

Die in Fig. 1 gezeigte Linearbewegungsführung 1 weist eine Zahnstange 2 auf, die mit einer Führungsschiene 3 durch mehrere Schraubverbindungen verbunden ist. In der Darstellung von Fig. 1 sind die an sich bekannten Schraubverbindungen lediglich durch in eine Oberseite der Schiene einsetzbare Kappen 4 zur Abdeckung der für die Schraubenverbindungen in der Schiene 3 vorgesehenen Durchgangsbohrungen angedeutet.

Auf der einstückigen und im Ausführungsbeispiel ca. 6 m langen Führungsschiene 3 ist ein im Querschnitt im wesentlichen U-förmiger Schlitten 5 angeordnet, in dessen beiden Schenkeln jeweils zwei in sich geschlossene und nicht näher dargestellte Wälzkörper-Umläufe ausgebildet sind. In diesen Umläufen zirkulieren jeweils Wälzkörper, wie beispielsweise Kugeln oder Rollen. Im Bereich einer nicht näher dargestellten Tragzone der Umläufe liegen die Wälzkörper sowohl am Schlitten 5 als auch an seitlichen Tragflächen 6 der Schiene 3 an. Hierdurch ist der Schlitten 5 sowohl in an sich vorbekannter Weise auf der Schiene 3 gelagert als auch relativ zur Schiene entlang einer Längsbewegungsachse 7 längsbeweglich.

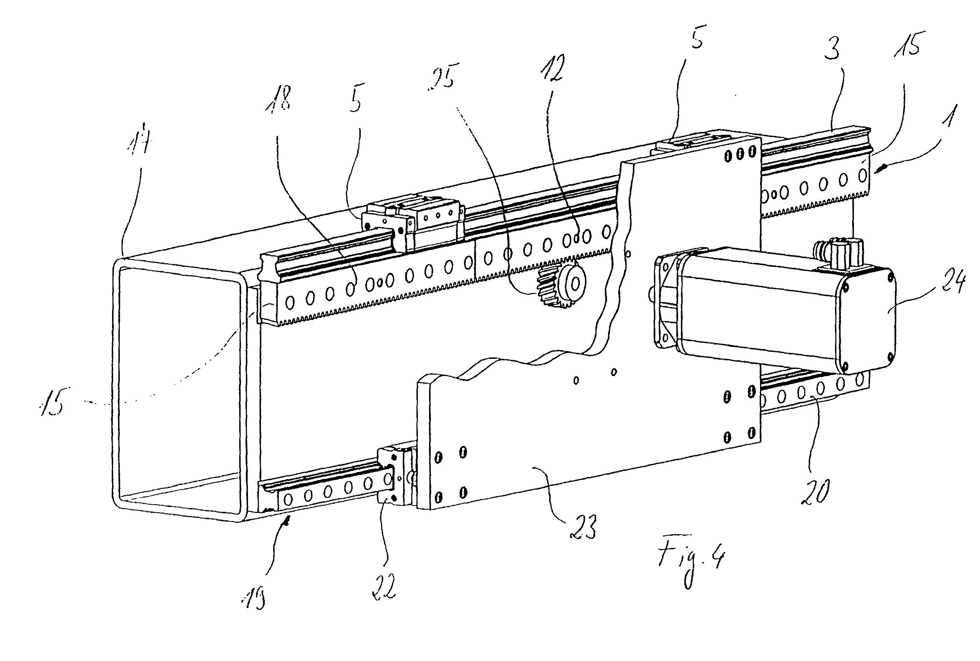

In der Schnittdarstellung von Fig. 2 ist eine in jeder der Durchgangsbohrungen 8 vorgesehene Stufe zu erkennen, die als Anschlag für den Kopf der in der jeweiligen Bohrung angeordneten Gewindeschraube 9 dient. Die Durchgangsbohrungen münden aus einer ebenen Unterseite 10 der Schiene, mit der diese flächig auf einer ebenfalls ebenen Oberseite der Zahnstange 2 anliegt.

Die Zahnstange 2 weist ebenfalls aus ihrer Oberseite mündende Ausnehmungen auf. Diese sind jeweils als Sacklochbohrung 11 ausgebildet, die mit einem Innengewinde versehen sind. Die Ausnehmungen der Zahnstange fluchten mit der entsprechenden Durchgangsbohrung 8 der Schiene 3, so dass jeweils eine durch eine Durchgangsbohrung 8 durchgesteckte Schraube 9 in die entsprechende Sacklochbohrung 11 der Zahnstange 2 eingeschraubt werden kann. Die Zahnstange 2 weist zudem quer zu den Sacklochbohrungen 11 und quer zur Längsbewegungsachse 7 verlaufende weitere Befestigungsbohrungen 14 auf. Diese sind zur Befestigung des gesamten Linearführungs- und Antriebssystems an einem Maschinenstrukturteil, beispielsweise einem Gestell, einer Maschine, mittels weiteren Schrauben vorgesehen. Mittels in Durchgangslöchern 12 einzusetzenden (nicht dargestellten) Stiften (z.B. nach der DIN EN ISO 8734) kann die Führung zusätzlich mit dem entsprechenden Maschinenstrukturteil verstiftet werden.

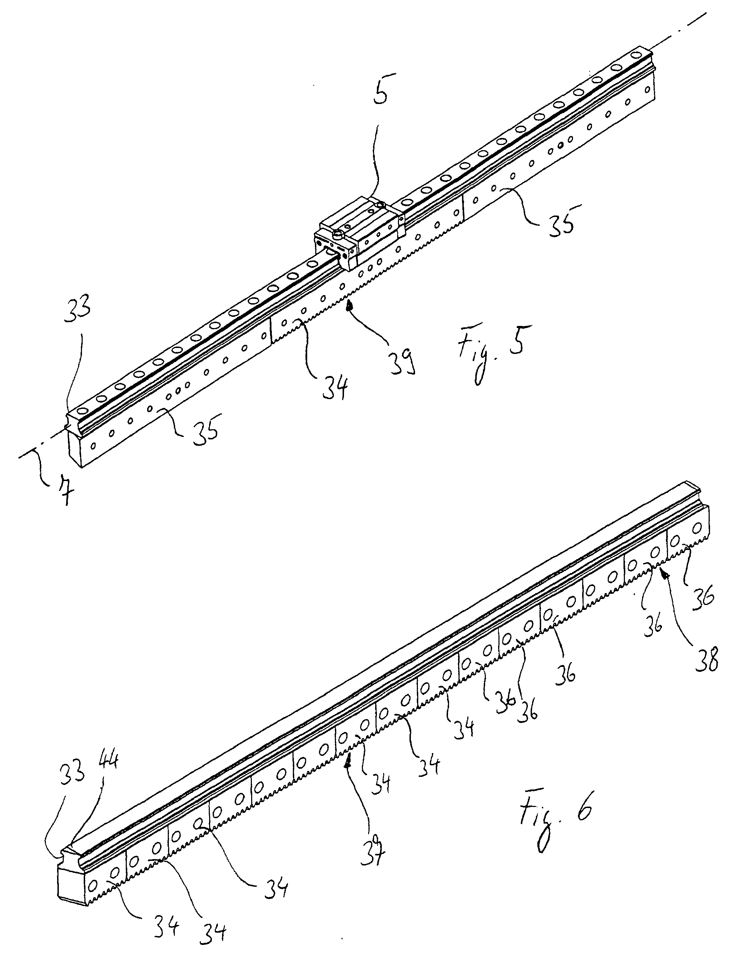

Wie in Fig. 1 und Fig. 3 gezeigt ist, setzt sich die Zahnstange 2 aus einzelnen Zahnstangensegmenten 15 zusammen, die unmittelbar aneinander gereiht und an der Schiene 3 befestigt sind. Für die einstückige Schiene mit einer (Gesamt-)Länge von z.B. 6000 mm sind insgesamt 15 Zahnstangensegmente mit einer Länge von jeweils 400 mm vorgesehen. Alternativ hierzu könnte die gleiche Länge auch mit 20 Zahnstangensegmenten erreicht werden, die jeweils eine Länge von 300 mm aufweisen.

Jedes Zahnstangensegment 15 weist an seiner Unterseite eine Verzahnung 16 auf, beispielsweise eine Schrägverzahnung. Die Verzahnung 16 ist gehärtet und geschliffen. Jedes der Zahnstangensegmente entspricht den Anforderungen der Verzahnungsqualität Stufe 5 der DIN 3961, DIN 3962, DIN 3967 und DIN 3963. Hierdurch weist die Linearbewegungsführung 1 an der Unterseite der Schiene 3 und parallel zur Längsbewegungsachse 7 über ihre gesamte Länge eine qualitativ hochwertige Verzahnung auf. Die Zahnstangensegmente 15 sind an ihren Stirnseiten so aneinandergereiht, dass sich über die gesamte Länge der auf diese Weise zusammengesetzten Zahnstange 2 eine durchgehende Verzahnung ergibt. Durch geeignete Ausrichtung aufeinanderfolgender Zahnstangensegmente 15 kann zum einen ein innerhalb eines engen Toleranzbandes liegender Summenteilungsfehler der Verzahnung über die gesamte Verzahnungslänge erreicht werden. Zum anderen kann hierdurch ein günstiger, insbesondere stufenloser und spielfreier, Übergang innerhalb der Verzahnung 16 von einem Zahnstangensegment 15 zum jeweils nächsten Zahnstangensegment 15 erzielt werden. Eine aufgrund von Übergängen eventuell zu befürchtende zusätzliche Belastung oder Spiel eines in der Verzahnung laufenden Ritzels kann hierdurch vermieden werden.

Je nach Verzahnungstyp (Gerad- oder Schrägverzahnung) kann der Stoss (Übergang) zwischen aufeinanderfolgenden Zahnstangensegmenten gerade oder schräg verlaufen. Werden mehrere Führungsschienen aneinander gereiht, so kann auch deren Stoss gerade oder schräg ausgebildet sein. Es sind hierbei auch Kombinationen möglich, bei denen die Zahnstangensegmente einen schrägen und die Schienen einen geraden Stoss - oder umgekehrt - aufweisen.

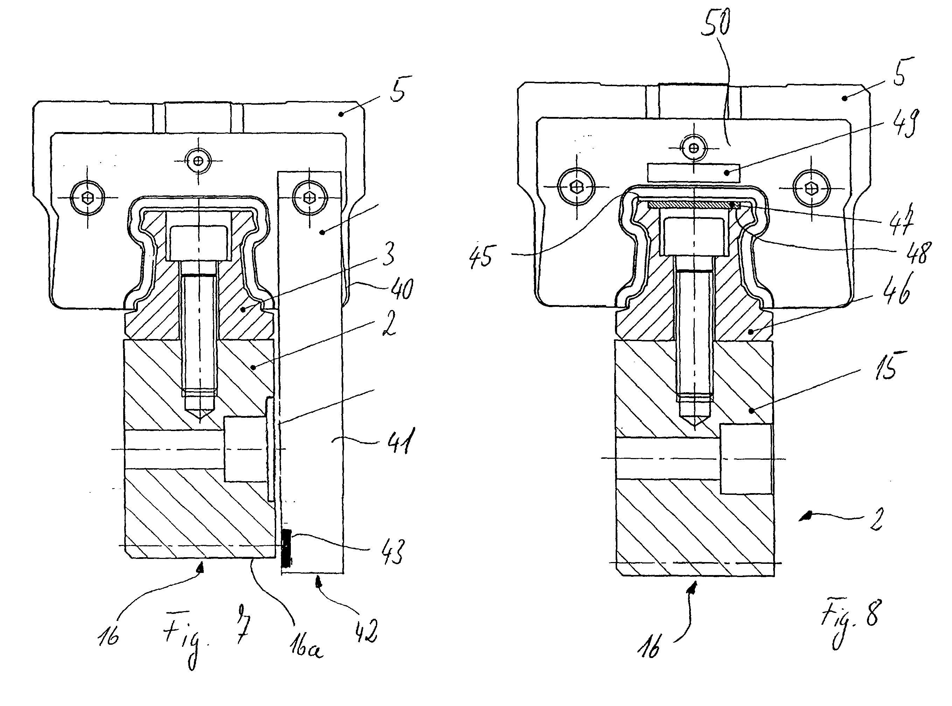

In Fig. 4 ist ein Anwendungsbeispiel für eine erfindungsgemässe Linearbewegungsführung 1 gezeigt, bei der an einer Schiene mehrere Zahnstangensegmente 15 befestigt sind. Auf der Schiene 3 sind zwei Schlitten 5 längsverschiebbar angeordnet. Die Zahnstangensegmente 15 sind an einem Maschinengestell 17 durch Schraubverbindungen 18 befestigt und weisen in der Summe ihrer einzelnen Längen eine Gesamtlänge auf, die zumindest näherungsweise der Länge der einstückigen Schiene entspricht.

In diesem Ausführungsbeispiel ist auch eine zweite Linearbewegungsführung 19 vorgesehen, die am gleichen Maschinengestell 17 angeschraubt ist. Die zweite Linearbewegungsführung 19 weist eine Schiene 20 auf, deren Längsbewegungsachse 21 parallel zur Längsbewegungsachse 7 der ersten Linearbewegungsführung 1 verläuft. Auch auf dieser Schiene 20 sind zwei Schlitten 22 über Wälzkörper längsverschiebbar angeordnet. An den Schlitten 5, 22 der beiden Führungen ist ein Tisch 23 befestigt, der beispielsweise zu einer nicht näher dargestellten Holzbearbeitungsmaschine gehört. Mit einem Antrieb 24 des Tisches kann ein schrägverzahntes Ritzel 25 in Rotation versetzt werden. Ein oder mehrere Ritzel 25 kämmen mit der Verzahnung 16 der Zahnstange 2, wodurch eine Antriebsbewegung von einem oder mehreren Tischen 23 generiert wird. Auf den Tisch 23 wirkende Kräfte bzw. Momente werden über die Linearbewegungsführungen 1, 19 in das Maschinengestell übertragen.

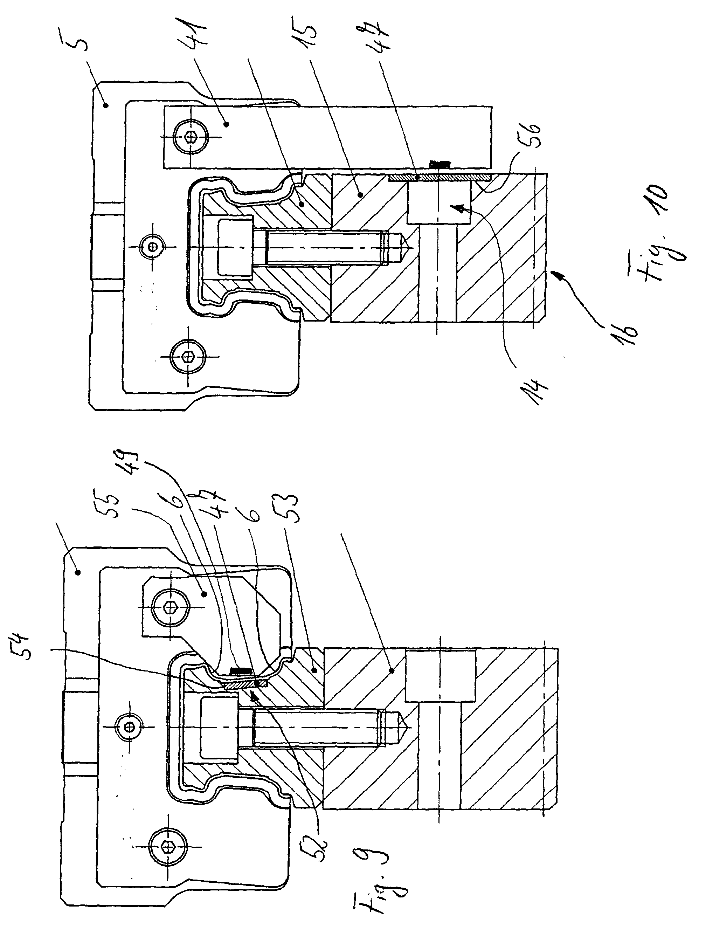

Die Fig. 5 und Fig. 6 zeigen schliesslich zwei weitere Linearbewegungsführungen 30, 31, die aus dem gleichen Linearführungssystem gebildet sind, wie auch die Ausführungsformen nach Fig. 1 und Fig. 4. In Fig. 5 sind an eine erste einstückige Schiene 33 mit einer Länge von 6 m mehrere Zahnstangensegmente 34 mit einer Schrägverzahnung 39 angebracht. Zudem sind an der Schiene auch Segmente 35 ohne Verzahnung befestigt. Die Segmente 35 ohne Verzahnung befinden sich in Richtung der Längsbewegungsachse 7 gesehen, an den Stellen der Schiene 33, an denen ein Eingriff eines Ritzels in die Zahnstange nicht erforderlich ist.

Bei Fig. 6 sind hingegen an die gleiche Schiene 33 zwei unterschiedliche Typen von Zahnstangensegmenten 34, 36 befestigt, die mit unterschiedlichen Verzahnungen 37, 38 versehen sind. Die in diesen Figuren nicht gezeigten unterschiedlichen Ritzel zum Eingriff in jeweils eine der beiden Verzahnungen 37, 38 sind an letztgenannte jeweils angepasst. Zudem kann vorgesehen sein, dass sich die Schienen 33 der beiden Linearbewegungsführungen nach Fig. 5 und Fig. 6 auch hinsichtlich ihrer Eigenschaften unterscheiden, beispielsweise hinsichtlich Form oder Grösse ihrer Querschnittsflächen. Durch eine geeignete Gestaltung der Querschnittsform kann es beispielsweise möglich sein, ein Abdeckband 44 auf der Schiene anzuordnen, das einen die Oberseite der Schiene vollständig bedeckenden Mittelabschnitt sowie seitliche Schenkel aufweist.

Selbstverständlich können Ausführungsformen vorgesehen sein, bei denen die Schlitten einer Linearbewegungsführung gemeinsam und simultan oder unabhängig voneinander bewegt werden. Für jeden Schlitten kann hierbei für seinen Verfahrweg, der einer Teillänge der Gesamtlänge der Linearbewegungsführung entspricht, eine an seine Belastungssituation angepasste Verzahnung vorgesehen werden.

Eine erste mögliche Messeinrichtung des erfindungsgemässen Linearführungssystems ist in Fig. 7 dargestellt. Gemäss dieser Darstellung ist an einen Schenkel 40 des im Querschnitt U-förmigen Schlittens 5 ein Träger 41 lösbar befestigt. Der Träger 41 ist mit geringem Abstand seitlich von der Schiene 3 und der Zahnstange 2 angeordnet. Ein freies Ende 42 des Trägers 41 befindet sich seitlich von der Verzahnung 16 der Zahnstange. Alternativ hierzu könnte das freie Ende durch eine Abwinklung auch über eine Oberseite 16a der Verzahnung 16 geführt sein.

An dem freien Ende ist ein Sensor 43 angeordnet, der mehrere nicht im Detail dargestellte permanenterregte magnetoresistive Sensorelemente aufweist. Derartige Sensorelemente, einschliesslich ihrer elektrischen Schaltung zu einem Sensor, sind an sich vorbekannt.

Der somit parallel zur Verzahnung 16 und mit geringem Abstand zu dieser geführte Sensor 43 detektiert die sich durch die Zähne und Zahnlücken jeweils ergebenden unterschiedlichen magnetischen Verhältnisse. Das einerseits Vorhandensein von metallischem Material und andererseits dessen Fehlen in Zahnlücken wird von jedem einzelnen Sensorelement erkannt und in Abhängigkeit der momentanen Position von jedem Sensorelement in Form eines entsprechenden elektrischen Signals wiedergegeben. Hierdurch kann eine nicht dargestellte elektronische Auswerteeinheit die relative Position einer Referenzstelle des Sensors, beispielsweise eines Referenzsensorelements, in Richtung der Längsbewegungsachse gegenüber der Zahnstange bestimmen. Auch derartige Auswerteelektronik ist vorbekannt, beispielsweise aus der DE 42 375 40 C2 und der DE 42 33 332 C2.

Alternativ können induktive oder auch optische Sensorelemente benutzt werden, die beispielsweise reflektierende Zähne oder Zahnlücken detektieren. Unabhängig von dem physikalischen Wirkprinzip der Sensorelemente ist diesen Ausführungsformen einer Messeinrichtung gemeinsam, dass die Verzahnung bzw. deren Teilung T zur Längenmessung benutzt wird. Die Grösse der Teilung wird als bekannt vorausgesetzt und bei einer relativen Bewegung der Sensorelemente, insbesondere einer Referenzstelle, gegenüber der Verzahnung durch den Sensor für eine Längenmessung benutzt. In die Längenmessung kann beispielsweise das Produkt der Anzahl der Nullsignale des Referenzsensorelementes mit der Teilung einfliessen. Es hat sich gezeigt, dass sich hiermit sehr genaue Längenmessungen durchführen lassen.

Erfindungsgemäss können mehrere derartige Messeinrichtungen innerhalb des Linearführungssystems vorgesehen sein. Diese unterscheiden sich zumindest in der unterschiedlichen Teilung T, die sowohl bei der jeweiligen Verzahnung vorhanden, als auch bei der Auswertung der von den Sensorelementen erzeugten Signalen berücksichtigt wird.

In einer in Fig. 8 gezeigten anderen Ausführungsform ist ein in die Oberseite 45 der Schiene 46 integriertes metallisches Band 47 vorgesehen. Auf das Band 47 ist eine parallel zur Längsbewegungsachse 21 der Führung verlaufende Massverkörperung aufgebracht. Diese kann beispielsweise eine oder mehrere Spuren mit magnetischer Teilung aufweisen. Jede Spur hat zwei alternierend aufeinanderfolgende Teilungselemente gleicher Länge aber unterschiedlicher magnetischer Eigenschaften. Die Länge der vorzugsweise gleich langen Teilungselemente hängt im wesentlichen von der vorgesehenen Messgenauigkeit ab. Selbstverständlich sind auch grundsätzlich andere Massverkörperungen möglich, beispielsweise optische Markierungen. Dieses Band 47 kann passgenau in eine mittige Nut 48 der Oberseite 45 der Schiene eingebracht und in dieser befestigt sein. Somit übernimmt das Band 47 auch die Funktion eines Abdeckbandes.

Damit auch bei dieser Ausführungsform ein Sensor 49 unmittelbar über das Band 47 geführt werden kann ohne dieses zu berühren, ist ein solcher in einem Verbindungsschenkel 50 des U-förmigen Schlittens befestigt.

Bei der Montage einer Linearführung dieser Ausführungsform können herstellerseitig zunächst Zahnstangensegmente 15, 34, 36 an die vorzugsweise einstückige Führungsschiene 46 mittels Schraubenverbindungen lösbar befestigt werden. Danach wird das Band 47, das bereits mit einer Massverkörperung versehen ist, in die Nut 48 eingeklebt. Zur Erzeugung der Massverkörperung auf dem Band kann beispielsweise das in der europäischen Patentanmeldung mit der Anmeldenummer 99123615.9 beschriebene Verfahren benutzt werden.

Der Hersteller der Linearbewegungsführung kann somit eine vollständig vormontierte Linearbewegungsführung mit Messeinrichtung ausliefern, die von einem Maschinenhersteller, beispielsweise von Werkzeugmaschinen, als Baugruppe sofort in seine Maschinen eingebaut werden kann. Bei dem Maschinenhersteller fällt somit weder für die Linearbewegungsführung selbst, noch für die Messeinrichtung ein nennenswerter Montageaufwand an.

Bei der Ausführungsform von Fig. 9 ist das Band 47 aus Fig. 8 in eine Seitenfläche 52 der Schiene 53 eingeklebt. Das Band 47 befindet sich hier in einer Nut 54 zwischen zwei Laufflächen 6 für Wälzkörper.

Der Sensor 49 aus Fig. 8 ist bei dieser Ausführungsform an einem Träger 55 angeordnet, der an einer Stirnseite des Schlittens 5 befestigt ist. Der Träger 55 ist wiederum unmittelbar vor das Band 47 mit der Massverkörperung geführt. Bei dieser Ausführungsform kann die Schiene 53 mit dem Band 47 komplett vormontiert werden, bevor die Schiene 53 mit der Zahnstange verschraubt wird.

Schliesslich kann auch in jedem Zahnstangensegment 15, 34, 36 bzw. Segment 35 eine seitliche Nut eingebracht sein, die eine durchgehende Nut 56 der Zahnstange ergeben. Wie Fig. 10 zeigt, kann in diese parallel zur Längsbewegungsachse verlaufende Nut 56 wiederum ein Band, beispielsweise das Band 47 aus Fig. 8 und Fig. 9, angeordnet sein, das eine Massverkörperung enthält. Mit Vorteil verläuft die Nut 56 über die Bohrungen 14, die zur Befestigung der Zahnstange an einem Maschinenteil dienen. Hierdurch deckt das Band 47 die Bohrungen 14 ab, wodurch vermieden wird, dass sich in den Bohrungen Schmutz festsetzen kann. Auch bei dieser Ausführung ist ein am Schlitten 5 befestigter Träger 41 vor das Band 47 geführt, der zur Aufnahme eines Sensors dient, mit dem mit Hilfe der Massverkörperung eine Längenmessung durchgeführt werden kann.

Wie auch bei anderen erfindungsgemässen Ausführungsformen kann das Band 47 als Stahlband ausgebildet sein, das vorzugsweise mit einer magnetischen Schicht versehen ist. Letztere kann kunststoffgebundene Magnete oder eine galvanisch aufgebrachte magnetische Schicht enthalten.

Auch bei dieser Ausführungsform kann die Schiene/Zahnstange nach kundenspezifischen Anforderungen vorkonfektioniert und komplett montiert einem Maschinenhersteller geliefert werden. Nachdem dieser die Schiene/Zahnstange in seine Maschine verschraubt hat, kann er das Band in die Nut einsetzen.

Schliesslich kann das Linearführungssystem auch weniger aufwendige Messsysteme beinhalten, die aber für bestimmte Anwendungen eine ausreichende Genauigkeit liefern. Ein Beispiel hierfür ist ein Drehgeber an einem Antriebsmotor. Derartige Messsysteme können dann mit den genannten hochgenauen und technisch aufwendigeren Messsystemen kombiniert werden. So ist es beispielsweise für die Fälle möglich, in denen eine genaue Positionierung eines Schlittens immer nur entlang einer vorgegebenen Teillänge der Führungsschiene vorgenommen werden muss, das hochgenaue Messsystem auf diese Teillänge zu beschränken. Entlang der restlichen Länge der Schiene kann mit dem weniger genauen Messsystem die Ermittlung der Position des Schlittens vorgenommen werden.

Bei dem erfindungsgemässen Linearführungssystem können eine Vielzahl der erörterten Komponenten miteinander kombiniert werden, um hiermit jeweils andere Linearbewegungsführungen zu bilden. Da hierbei stets auf eine grosse Anzahl identischer Komponenten, wie beispielsweise Schienen, Zahnstangensegmente, Bänder, Schlitten etc. zurückgegriffen werden kann, ist es möglich, mit geringem Aufwand ein baukastenartiges Linearführungssystem auszubilden. Trotz einer relativ geringen Anzahl von unterschiedlichen Komponenten kann eine grosse Anzahl von möglichen unterschiedlichen Kombinationen erzielt werden. Hierdurch ist es einem Hersteller von gattungsgemässen Linearbewegungsführungen möglich, ohne weiteres auf kundenspezifische Bedürfnisse einzugehen.

## Patentansprüche

1. Linearführungssystem, umfassend
zumindest eine Führungsschiene (3), die Laufflächen für Wälzkörper aufweist,
zumindest einen Schlitten (5), der über die Wälzkörper auf der Schiene (3) gelagert und relativ zu dieser längsverschiebbar ist,
mehrere Zahnstangen (2), die jeweils an der Schiene (3) lösbar befestigbar und zumindest über einen Teil ihrer Länge mit einer Verzahnung versehen sind,
wobei mit der zumindest einen Führungsschiene (3), dem zumindest einen Schlitten (5) und jeweils einer der Zahnstangen (2) eine Linearbewegungsführung bildbar ist,
**dadurch gekennzeichnet,**
**dass** jede der Zahnstangen aus Zahnstangensegmenten (15, 34, 36) zusammensetzbar ist, hierbei mehrere unterschiedliche Typen von Zahnstangensegmenten (15, 34, 36) montierbar sind, die sich zumindest in Bezug auf Eigenschaften der Verzahnungen (16, 37 - 39) voneinander unterscheiden, und jedes der Zahnstangensegmente (15, 34, 36) an der Schiene lösbar befestigbar ist.

2. Linearführungssystem nach Anspruch 1, **gekennzeichnet durch** mehrere unterschiedliche Schienen (3, 20, 33, 46, 53), an die jeweils die gleichen Zahnstangensegmente (15, 34, 36) anfügbar sind.

3. Linearführungssystem nach Anspruch 1 oder 2, **gekennzeichnet durch** zumindest eine Zahnstange, die Zahnstangensegmente mit unterschiedlichen Eigenschaften der Verzahnung aufweist.

4. Linearführungssystem nach einem der vorhergehenden Ansprüche, **gekennzeichnet durch** ein Segment (35), das in eine Zahnstange integrierbar ist und keine Verzahnung aufweist.

5. Linearführungssystem nach einem der vorhergehenden Ansprüche, **dadurch gekennzeichnet, dass** an der Schiene (3, 20, 33, 46, 53) in einem bestimmten Raster Ausnehmungen für Befestigungselemente vorgesehenen sind, in dem sich Zahnstangensegmente (15, 34, 36), vorzugsweise sämtliche im Linearführungssystem vorgesehenen Typen von Zahnstangensegmenten, befestigen lassen.

6. Linearführungssystem nach einem der vorhergehenden Ansprüche, **gekennzeichnet durch** einen Antrieb, der zumindest eine Antriebseinheit und für jede Verzahnung mindestens ein passendes Eingriffselement, wie ein Ritzel oder dergleichen, aufweist.

7. Linearbewegungssystem nach einem der vorhergehenden Ansprüche, **gekennzeichnet durch** mindestens eine Messeinrichtung zur Längenmessung, die eine Massverkörperung und einen Sensor aufweist, wobei mit einer Auswerteeinheit und dem Sensor **durch** Detektion der Massverkörperung eine Weglänge einer Relativbewegung zwischen dem Schlitten und der Führungsschiene bestimmbar ist.

8. Linearführungssystem nach Anspruch 7, **gekennzeichnet durch** einen Sensor, der an einem der Schlitten befestigt und bei Relativbewegungen zwischen dem Schlitten und der Zahnstange mit Abstand an der Verzahnung vorbeiführbar ist, wobei mit dem Sensor einerseits Zähne und andererseits Zahnlücken der Verzahnung als Massverkörperung detektierbar sind, mit dem Sensor in Abhängigkeit von seiner Position in Richtung der jeweiligen Längsbewegungsachse gegenüber einzelnen Zähnen und Zahnlücken unterschiedliche Signale erzeugbar sind, die Signale von der Auswerteeinheit der Messeinrichtung unter Berücksichtigung der Teilung der Verzahnung zur Bestimmung eines Weges in Richtung der Längsbewegungsachse und/oder einer absoluten Position benutzt wird.

9. Linearführungssystem nach Anspruch 8, **gekennzeichnet durch** einen Sensor mit mehreren Sensorelementen, die in einer Längsrichtung des Sensors in einer Weise verteilt sind, **durch** die zumindest ein Sensorelement eine Zahnlücke und zumindest ein weiteres Sensorelement einen benachbarten Zahn detektiert.

10. Linearführungssystem nach Anspruch 8 oder 9, **gekennzeichnet durch** einen magnetoresistiven oder induktiven Sensor.

## Claims

1. A linear guidance system, including
at least one guide rail (3) having running surfaces for rolling members,
at least one sliding carriage (5), which is disposed on the rail (3) above the rolling member, and is movable longitudinally relative to the rail,
multiple toothed racks (2), each of which is separably attachable to the rail (3) and is furnished with gearing at least over a part of its length,
wherein a linear movement guide can be constructed with the at least one guide rail (3), the at least one sliding carriage (5) and each of the toothed racks (2),
**characterised in that**
each of the toothed racks can be constructed from toothed rack segments (15, 34, 36), in which case several different types of toothed rack segment (15, 34, 36) can be mounted, which differ from each other at least with respect to the properties of their respective gearing (16, 37 - 39), and each of the toothed rack segments (15, 34, 36) can be detachably attached to the rail.

2. The linear guidance system as cited in claim 1,
**characterised by**
multiple different rails (3, 20, 33, 46, 53), to each of which the same toothed rack segments (15, 34, 36) can be added.

3. The linear guidance system as cited in either of claims 1 or 2,
**characterised by**
at least one toothed rack that includes toothed rack segments having differing gearing properties.

4. The linear guidance system as cited in any of the preceding claims, **characterised by** a segment (35) that can be integrated in a toothed rack and has no gearing.

5. The linear guidance system as cited in any of the preceding claims, **characterised in that** cutouts are provided in a specific pattern on the rail (3, 20, 33, 46, 53) for attachment elements, in which toothed rack elements (15, 34, 36), preferably all types of toothed rack segments provided in the linear guidance system, can be attached.

6. The linear guidance system as cited in any of the preceding claims, **characterised by**a power plant that has at least one drive unit and at least one engaging member that matches each gearing type, such as a pinion gear or similar.

7. The linear guidance system as cited in any of the preceding claims, **characterised by** at least one measuring device for measuring length, which has a measuring representation and a sensor, a travel length of relative movement between the sliding carriage and the guide rail being calculable with an evaluation unit and the sensor by detection of the measuring representation.

8. The linear guidance system as cited in claim 7, **characterised by** a sensor that is attached to one of the sliding carriages and has sufficient clearance to move past the gearing in the event of relative movements between the sliding carriage and the toothed rack, wherein both teeth and gearing gaps are detectable as measuring representation by the sensor, various signals can be generated with the sensor depending on the position thereof in the direction of the respective longitudinal axis of movement relative to the individual teeth and gearing gaps, the signals are used by an evaluation unit in the measurement device taking into account the spacing of the gearing to determine a travel path in the direction of the longitudinal axis of movement and/or an absolute position. -

9. The linear guidance system as cited in claim 8, **characterised by** a sensor having multiple sensor elements, which are distributed in a lengthwise direction of the sensor in a manner such that at least one sensor element detects a gearing gap and at least one additional sensor element detects an adjacent tooth.

10. The linear guidance system as cited in claim 8, **characterised by** a magnetoresistive or inductive sensor.

## Revendications

1. Système de guidage linéaire, comprenant
au moins un rail de guidage (3), qui présente des surfaces de roulement pour des éléments roulants,
au moins un coulisseau (5), qui est positionné par l'intermédiaire des éléments roulants sur le rail (3) et est déplaçable longitudinalement relativement à celui-ci,
plusieurs crémaillères (2), qui sont respectivement fixables de manière amovible sur le rail (3) et sont pourvues d'une denture sur au moins une partie de leur longueur,
dans lequel un guide de mouvement linéaire peut être formé par au moins le rail de guidage (3), au moins le coulisseau (5) et respectivement une des crémaillères (2),
**caractérisé en ce que**,
chacune des crémaillères est composée de segments de crémaillère (15,34,36), plusieurs types différents de segments de crémaillère (15,34,36) peuvent ici être montés, lesquels se différencient les uns des autres au moins en ce qui concerne les propriétés des dentures (16, 37-39) et chacun des segments de crémaillère (15,34,36) peut être fixé de manière amovible au rail.

2. Système de guidage linéaire selon la revendication 1, **caractérisé par** plusieurs rails différents (3,20,33,46,53), auxquels respectivement les mêmes segments de crémaillère (15,34,36) peuvent être ajoutés.

3. Système de guidage linéaire selon la revendication 1 ou 2, **caractérisé par** au moins une crémaillère, qui présente des segments de crémaillère avec des propriétés de denture différentes.

4. Système de guidage linéaire selon une des revendications précédentes, **caractérisé par** un segment (35), qui peut être intégré dans une crémaillère et ne présente aucune denture.

5. Système de guidage linéaire selon une des revendications précédentes, **caractérisé en ce que** des évidements pour des éléments de fixation sont prévus sur le rail (3,20,33,46,53) dans une grille déterminée, dans lesquels des segments de crémaillère (15,34,36), de préférence tous les types de segments de crémaillère prévus dans le système de guidage linéaire, peuvent être fixés.

6. Système de guidage linéaire selon une des revendications précédentes, **caractérisé par** un mécanisme d'entraînement, qui présente au moins une unité d'entraînement et pour chaque denture au moins un élément d'engrenage approprié, comme un pignon ou similaire.

7. Système de mouvement linéaire selon une des revendications précédentes, **caractérisé par** au moins un dispositif de mesure pour la mesure des longueurs, qui présente une représentation de mesure et un capteur, moyennant quoi une longueur de trajet d'un mouvement relatif entre le coulisseau et le rail de guidage peut être déterminée avec une unité d'estimation et le capteur par la détection de la représentation de mesure.

8. Système de guidage linéaire selon la revendication 7, **caractérisé par** un capteur, qui est fixé sur un des coulisseaux et peut être avancé lors de mouvements relatifs entre le coulisseau et la crémaillère à distance de la denture, moyennant quoi d'une part des dents et d'autres part des entre-dents de la denture sont détectables comme une représentation de mesure à l'aide du capteur, des signaux différents peuvent être produits à l'aide du capteur en fonction de sa position dans la direction de l'axe de mouvement longitudinal respectif par rapport aux dents et entre-dents individuels, les signaux sont utilisés par l'unité d'estimation du dispositif de mesure en prenant en compte le pas primitif de la denture afin de déterminer un trajet dans la direction de l'axe de mouvement longitudinal et/ou une position absolue.

9. Système de guidage linéaire selon la revendication 8, **caractérisé par** un capteur comportant plusieurs éléments de capteur, qui sont répartis dans une direction longitudinale du capteur d'une manière telle que au moins un des éléments de capteur détecte un entre-dents et au moins un autre élément de capteur détecte une dent voisine.

10. Système de guidage linéaire selon la revendication 8 ou 9, **caractérisé par** un capteur magnéto-résistif ou inductif.
